# EUROPEAN PATENT APPLICATION

(11) **EP 4 671 066 A1**
(43) Date of publication of application: **31.12.2025**
(21) Application number: 24773875.0
(22) Date of filing: 28.02.2024
(51) Int. Cl.: B60W 30/09, G01C 21/34

(54) **AVOIDANCE CONTROL METHOD, INTELLIGENT DEVICE, AND VEHICLE**

(30) Priority: 23.03.2023 CN 202310356357
(71) Applicant: Shenzhen Yinwang Intelligent Technologies Co., Ltd., Shenzhen, Guangdong 518110 (CN)
(72) Inventor: CAI, Hengyi, Shenzhen, Guangdong 518129 (CN)
(74) Representative: Gill Jennings & Every LLP
(86) International application number: PCT/CN2024/079142
(87) International publication number: WO 2024/193307

(57) **Abstract**

An avoidance control method, an intelligent device, and a vehicle are provided. The vehicle can be away from a target object as far as possible while ensuring avoidance safety. The intelligent device may determine a first constraint of avoidance control based on first information of the target object in a surrounding environment of the intelligent device, where the first constraint indicates a first passing area in which the intelligent device avoids the target object; and determine a second constraint of avoidance control based on second information of the target object, where the second constraint indicates a second passing area that is in the first passing area and in which the intelligent device is away from the target object. Based on the first constraint and the second constraint, the intelligent device can keep the vehicle away from the target object as far as possible while ensuring avoidance safety.

## Description

This application claims priority to Chinese Patent Application No. 202310356357.2, filed with the China Intellectual Property Administration on March 23, 2023 and entitled "AVOIDANCE CONTROL METHOD, INTELLIGENT DEVICE, AND VEHICLE", which is incorporated herein by reference in its entirety.

### TECHNICAL FIELD

Embodiments of this application relate to the field of artificial intelligence, and in particular, to an avoidance control method, an intelligent device, and a vehicle.

### BACKGROUND

Artificial intelligence (artificial intelligence, AI) is a theory, a method, a technology, and an application system that are used to simulate, extend, and expand human intelligence by using a digital computer or a machine controlled by a digital computer, to perceive an environment, obtain knowledge, and achieve an optimal result by using the knowledge. In other words, artificial intelligence is to research design principles and implementation methods of various intelligent machines, so that the machines have perception, inference, and decision-making functions.

Autonomous driving is a mainstream application in the field of artificial intelligence. An autonomous driving technology relies on collaboration of computer vision, a radar, a monitoring apparatus, a global positioning system, and the like, to implement autonomous driving of intelligent devices (such as autonomous driving vehicles, robots (robots), or other autonomous driving apparatuses) without an active human operation.

Generally, an autonomous driving policy of an intelligent device includes avoidance control, so that when a target object (such as a pedestrian or a vehicle) exists in a surrounding environment of the intelligent device, collision with the target object can be avoided. However, currently, avoidance control cannot ensure rationality and stability of an avoidance process of an intelligent device.

### SUMMARY

This application provides an avoidance control method, an intelligent device, and a vehicle, to keep the vehicle away from a target object as far as possible while ensuring avoidance safety.

To achieve the foregoing objectives, the following technical solutions are used in embodiments of this application.

According to a first aspect, an avoidance control method is provided and applied to an intelligent device. The method includes: determining a first constraint of avoidance control based on first information of a target object in a surrounding environment of the intelligent device, where the first constraint indicates a first passing area in which the intelligent device avoids the target object; and determining a second constraint of avoidance control based on second information of the target object, where the second constraint indicates a second passing area that is in the first passing area and in which the intelligent device is away from the target object.

According to the solution provided in the first aspect, the intelligent device may determine, based on the first information (such as a size and a contour) of the target object in the surrounding environment, the first constraint (namely, an outer constraint) used to constrain the intelligent device to avoid the target object, to indicate, by the first constraint, the first passing area in which the intelligent device can avoid the target object. In addition, the intelligent device may also determine, based on the second information (such as a speed magnitude and a speed direction) of the target object, the second constraint (namely, an inner constraint) used to further constrain the intelligent device to avoid the target object in a direction away from the target object, to indicate, by the second constraint, the second passing area that is in the first passing area and in which the intelligent device can avoid the target object, in which the intelligent device can be away from the target object. In this way, in this solution, inner and outer constraint conditions of avoidance control are determined, so that when the intelligent device avoids the target object, the intelligent device can tend to avoid the target object in the direction away from the target object. This reflects human-like behavior of being away from a potential risk. In addition, in this solution, the inner constraint of being away from the target object exists in addition to the outer constraint of avoiding the target object, so that when the intelligent device avoids the target object, there may be a sufficient area away from the target object. Even in case of a sudden danger, the intelligent device can perform stable and smooth avoidance by using the sufficient area rather than perform sudden and sensitive avoidance control (for example, a sharp turn), to achieve an objective of avoiding collision with the target object while stability of autonomous driving is considered. This improves rationality and stability of avoiding the target object by the intelligent device. In a possible implementation, the avoidance control method may further include: displaying an image including a location relationship among the intelligent device, the first passing area, and the second passing area. The user is visually prompted to know a passable area in which the intelligent device avoids an obstacle, so that the user has an expectation of avoidance behavior of the intelligent device.

In a possible implementation, the avoidance control method may further include: obtaining a live image of a surrounding environment of the intelligent device and displaying the live image; and displaying the first passing area and the second passing area in the live image. The live image indicates, to the user, the passable area in which the intelligent device avoids the obstacle, so that the user can more intuitively learn a surrounding scenario and the avoidance behavior of the intelligent device in a real scene.

In a possible implementation, the first passing area is displayed in a first color, and the second passing area is displayed in a second color. Different colors indicate avoidance passing areas of different risk levels to the user.

In a possible implementation, the avoidance control method may further include: displaying an image including a location relationship among the intelligent device, a boundary of the first constraint, and a boundary of the second constraint. The user is visually prompted with passing boundaries of different risk levels, so that the user can more intuitively learn a constraint effect of the passing boundaries.

In a possible implementation, the avoidance control method may further include: determining a first dangerous area indicated outside the boundary of the first constraint; determining a second dangerous area indicated outside the boundary of the second constraint; and displaying an image including a location relationship among the intelligent device, the first dangerous area, and the second dangerous area. The user is visually prompted with an impassable area of different risk levels, so that the avoidance behavior of the intelligent device is expected.

In a possible implementation, the first constraint includes constraining a distance between the target object and the intelligent device to be greater than a first preset distance; and the second constraint includes constraining a distance between the target object and the intelligent device to be greater than a second preset distance, where the second preset distance is greater than the first preset distance. For example, the first constraint constrains the intelligent device to be 10 cm away from the target object, and a main objective of the first constraint is to avoid the target object to prevent collision. The second constraint may constrain the intelligent device to be 60 cm away from the target object, and a main objective of the second constraint is to keep the intelligent device away from the target object as far as possible while the target object is avoided. In this way, the distance, constrained by the second constraint, by which the intelligent device is away from the target object is greater than the distance, constrained by the first constraint, by which the intelligent device is away from the target object, so that a passing area of the intelligent device can be narrowed from the first passing area to the second passing area.

In a possible implementation, the first information includes appearance information, and the second information includes the appearance information and speed information. In this way, the first passing area in which the intelligent device can avoid the target object may be first determined based on the appearance information such as a position, the size, and the contour of the target object, and then the passing area may be further narrowed to the second passing area based on the appearance information of the target object and the speed information of the target object, so that the intelligent device can also be away from the target object while the target object is avoided.

In a possible implementation, the second information further includes a lateral decision and/or a longitudinal decision of the intelligent device on the target object. In this way, the intelligent device may further constrain the second passing area more precisely with reference to the lateral decision and/or the longitudinal decision of the intelligent device on the target object.

In a possible implementation, the speed information includes the speed direction, and the second constraint includes: increasing an avoidance distance of the lateral decision when a direction of the lateral decision is the same as the speed direction; or decreasing an avoidance distance of the lateral decision when a direction of the lateral decision is opposite to the speed direction. For example, when the intelligent device is a vehicle, another vehicle (the target object) exists on a right side of an ego vehicle, and a lateral interaction decision made by the ego vehicle when facing the another vehicle is turning to the left and moving to the left side to avoid the another vehicle. In this case, if a speed direction of the another vehicle is towards the left side, the second constraint of avoidance control determined by the vehicle may be increasing strength of the lateral interaction decision, that is, turning further to the left for a specified distance and moving to the left side to avoid the another vehicle by a greater distance, to be away from the another vehicle, driving towards the left side, as far as possible. In this way, a degree of the lateral decision and/or the longitudinal decision of the intelligent device may be constrained, so that when the intelligent device avoids the target object, the intelligent device can tend to avoid in a direction away from the target object as much as possible.

In a possible implementation, the first constraint and the second constraint are constraint conditions with an attribute of a soft constraint. It may be understood that, because the constraint conditions are soft constraints, the constraints do not need to be strictly met, but need to be met as much as possible, and may be understood as a priority and a preference. In this way, the intelligent device allows a specific degree of violation of the inner soft constraint, and a case in which no decision can be made does not occur. In addition, even if the inner soft constraint is violated, the objective of avoiding the target object is also achieved under the outer soft constraint.

In a possible implementation, the avoidance control method may further include: determining an avoidance policy of the intelligent device based on the first constraint and the second constraint. In this way, passing range constraints of different risk levels of avoiding the target object and being away from the target object are combined, so that the intelligent device can properly avoid the target object.

In a possible implementation, the determining an avoidance policy of the intelligent device based on the first constraint and the second constraint includes: establishing a planning control model based on the first constraint and the second constraint, where the planning control model is configured to output a planned avoidance path. In the planning control model, a penalty coefficient of the first constraint is a first preset threshold, a penalty coefficient of the second constraint is a second preset threshold, and the first preset threshold is greater than the second preset threshold.

It may be understood that, the penalty coefficient for violating the first constraint is set to a larger value, so that it can be ensured, as much as possible, that an optimization result of the model is within the first passing area, that is, a planned path of the intelligent device is prevented as much as possible from falling into a high-risk area in which the intelligent device is prone to collision with the target object. The penalty coefficient for violating the second constraint is set to a smaller value, so that it can be ensured, as much as possible, that the optimization result of the model is within the second passing area, that is, the planned path of the intelligent device is planned, as much as possible, in the direction away from the target object, but may occasionally appear in the impassable area (the second dangerous area that does not meet the second constraint). Because a value of the penalty coefficient for violating the second constraint is not very large, when avoidance control is performed based on the second constraint, avoidance is not performed based on a passable area of the second constraint to an extreme extent. In this way, in consideration of environmental hazards, stability of avoidance can be considered at the same time, and avoidance comfort and emergency avoidance are naturally integrated, so that the intelligent device controls to find a good balance point between the emergency avoidance and excellent lateral and/or longitudinal driving performance.

According to a second aspect, this application provides an intelligent device, including a first determining unit and a second determining unit. The first determining unit is configured to determine a first constraint of avoidance control based on first information of a target object in a surrounding environment of the intelligent device, where the first constraint indicates a first passing area in which the intelligent device avoids the target object. The second determining unit is configured to determine a second constraint of avoidance control based on second information of the target object, where the second constraint indicates a second passing area that is in the first passing area and in which the intelligent device is away from the target object.

In a possible implementation, the intelligent device further includes a display unit, configured to display an image including a location relationship among the intelligent device, the first passing area, and the second passing area.

In a possible implementation, the intelligent device further includes an obtaining unit, configured to: obtain a live image of a surrounding environment of the intelligent device and display the live image. The display unit is configured to display the first passing area and the second passing area in the live image.

In a possible implementation, the first passing area is displayed in a first color, and the second passing area is displayed in a second color.

In a possible implementation, the display unit may also be configured to display an image including a location relationship among the intelligent device, a boundary of the first constraint, and a boundary of the second constraint.

In a possible implementation, the intelligent device further includes a third determining unit and a fourth determining unit. The third determining unit is configured to determine a first dangerous area indicated outside the boundary of the first constraint. The fourth determining unit is configured to determine a second dangerous area indicated outside the boundary of the second constraint. The display unit is configured to display an image including a location relationship among the intelligent device, the first dangerous area, and the second dangerous area.

In a possible implementation, the first constraint determined by the first determining unit includes: constraining a distance between the target object and the intelligent device to be greater than a first preset distance. The second constraint determined by the second determining unit includes: constraining a distance between the target object and the intelligent device to be greater than a second preset distance. The second preset distance is greater than the first preset distance.

In a possible implementation, the first information includes appearance information, and the second information includes the appearance information and speed information.

In a possible implementation, the second information further includes a lateral decision and/or a longitudinal decision of the intelligent device on the target object.

In a possible implementation, the speed information includes a speed direction, and the second constraint determined by the second determining unit includes: increasing an avoidance distance of the lateral decision when a direction of the lateral decision is the same as the speed direction; or decreasing an avoidance distance of the lateral decision when a direction of the lateral decision is opposite to the speed direction.

In a possible implementation, the first constraint determined by the first determining unit and the second constraint determined by the second determining unit are constraint conditions with an attribute of a soft constraint.

In a possible implementation, the intelligent device further includes a policy determining unit, configured to determine an avoidance policy of the intelligent device based on the first constraint and the second constraint.

In a possible implementation, the policy determining unit is configured to establish a planning control model based on the first constraint and the second constraint, where the planning control model is configured to output a planned avoidance path. In the planning control model, a penalty coefficient of the first constraint is a first preset threshold, a penalty coefficient of the second constraint is a second preset threshold, and the first preset threshold is greater than the second preset threshold.

According to a third aspect, this application provides an intelligent device, including one or more processors and one or more memories. The one or more memories are coupled to the one or more processors. The one or more memories are configured to store computer program code. The computer program code includes computer instructions. When the one or more processors execute the computer instructions, the intelligent device is enabled to perform the avoidance control method in any one of the possible implementations of the first aspect.

According to a fourth aspect, this application provides a vehicle-mounted device, including one or more processors and one or more memories. The one or more memories are coupled to the one or more processors. The one or more memories are configured to store computer program code. The computer program code includes computer instructions. When the one or more processors execute the computer instructions, the vehicle-mounted device is enabled to perform the avoidance control method in any one of the possible implementations of the first aspect.

According to a fifth aspect, this application provides a vehicle. The vehicle includes the vehicle-mounted device in the fourth aspect of this application. The vehicle may be configured to implement the avoidance control method in any one of the possible implementations of the first aspect.

According to a sixth aspect, this application provides a robot, including one or more processors and one or more memories. The one or more memories are coupled to the one or more processors. The one or more memories are configured to store computer program code. The computer program code includes computer instructions. When the one or more processors execute the computer instructions, the robot is enabled to perform the avoidance control method in any one of the possible implementations of the first aspect.

According to a seventh aspect, this application provides an avoidance control apparatus. The apparatus is included in an intelligent device, a robot, a vehicle, or a vehicle-mounted device. The apparatus has a function of implementing behavior of the intelligent device in any method in the first aspect or the possible implementations of the first aspect. The function may be implemented by hardware, or may be implemented by hardware executing corresponding software. The hardware or the software includes one or more modules or units corresponding to the foregoing function.

According to an eighth aspect, this application provides a chip system, and the chip system is applied to an intelligent device. The chip system includes one or more interface circuits and one or more processors. The interface circuit and the processor are interconnected through a line. The interface circuit is configured to receive a signal from a memory of the intelligent device, and send the signal to the processor. The signal includes computer instructions stored in the memory. When the processor executes the computer instructions, the intelligent device performs the avoidance control method in any one of the possible implementations of the first aspect.

According to a ninth aspect, this application provides a computer-readable storage medium, including computer instructions. When the computer instructions are run on an intelligent device, the intelligent device is enabled to perform the avoidance control method in any one of the possible implementations of the first aspect.

According to a tenth aspect, this application provides a computer program product. When the computer program product runs on a computer, the computer is enabled to perform the avoidance control method in any one of the possible implementations of the first aspect.

It may be understood that for beneficial effect that can be achieved by the intelligent device in any one of the second aspect and the possible implementations of the second aspect, the intelligent device in the third aspect, the vehicle-mounted device in the fourth aspect, the vehicle in the fifth aspect, the robot in the sixth aspect, the avoidance control apparatus in the seventh aspect, the chip system in the eighth aspect, the computer-readable storage medium in the ninth aspect, and the computer program product in the tenth aspect, refer to beneficial effect in any one of the first aspect and the possible implementations of the first aspect. Details are not described herein again.

### BRIEF DESCRIPTION OF DRAWINGS

FIG. 1 is a diagram of a structure of a vehicle according to an embodiment of this application;
FIG. 2 is a diagram of application of a cloud instruction-based autonomous driving vehicle according to an embodiment of this application;
FIG. 3 is a method flowchart of an avoidance control method according to an embodiment of this application;
FIG. 4 is a diagram 1 of a display interface according to an embodiment of this application;
FIG. 5 is a diagram 2 of a display interface according to an embodiment of this application;
FIG. 6 is a diagram 3 of a display interface according to an embodiment of this application;
FIG. 7 is a diagram 4 of a display interface according to an embodiment of this application;
FIG. 8 is a diagram 5 of a display interface according to an embodiment of this application;
FIG. 9 is a diagram 6 of a display interface according to an embodiment of this application;
FIG. 10 is a diagram 7 of a display interface according to an embodiment of this application;
FIG. 11 is a diagram 8 of a display interface according to an embodiment of this application; and
FIG. 12 is a diagram 9 of a display interface according to an embodiment of this application.

### DESCRIPTION OF EMBODIMENTS

In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate three cases: Only A exists, both A and B exist, or only B exists, where A and B may be singular or plural.

In the descriptions of this application, unless otherwise specified, "a plurality of" means two or more than two. "At least one of the following items (pieces)" or a similar expression thereof indicates any combination of these items, including any combination of a single item (piece) or a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, terms such as "example" or "for example" are used to represent giving an example, an illustration, or a description. Any embodiment or design scheme described as an "example" or "for example" in embodiments of this application should not be explained as being more preferred or more advantageous than another embodiment or design scheme. Exactly, use of the terms such as "example" or "for example" is intended to present a related concept in a specific manner for ease of understanding.

Features, structures, or characteristics in this application may be combined in one or more embodiments in any proper manner. In various embodiments of this application, sequence numbers of processes do not mean execution sequences. The execution sequences of the processes should be determined based on functions and internal logic of the processes, and should not constitute any limitation on implementation processes of embodiments of this application.

In some scenarios, some optional features in embodiments of this application may be independently implemented without depending on another feature, to resolve a corresponding technical problem and achieve corresponding effect. Alternatively, in some scenarios, the optional features may be combined with another feature based on a requirement.

In this application, unless otherwise specified, for same or similar parts in embodiments, refer to each other. In various embodiments of this application, unless otherwise specified or there is a logic conflict, terms and/or descriptions between different embodiments are consistent and may be mutually referenced, and technical features in different embodiments may be combined based on an internal logical relationship thereof, to form a new embodiment. The implementations of this application are not intended to limit the protection scope of this application.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

Generally, avoidance control of an intelligent device (for example, an autonomous driving vehicle or a robot) with an autonomous driving capability may be attributed to an optimization problem, that is, an optimal avoidance trajectory for achieving an optimization objective of the intelligent device is solved under a given constraint condition. Currently, in a constraint solution designed for the optimization problem, only a safety characteristic of avoidance is usually considered. For example, a single-layer hard constraint is used to avoid collision caused by an excessively short distance between the intelligent device and a target object. However, in this case, when the constraint is violated, stability of autonomous driving of the intelligent device cannot be considered in this solution. Therefore, a decision result obtained by using this solution is usually conservative and not human-like, causing a poor avoidance capability of the intelligent device. In addition, because a hard constraint condition is a condition that needs to be met, when there is an unresolvable case, avoidance control of the intelligent device cannot make a decision, and a safety risk is greatly increased.

In addition, a weight coefficient of avoidance control is also changed by recognizing a scenario, to achieve both avoidance security and stability in different scenarios. However, in this solution, mapping between the scenario and the weight coefficient depends on experience. This solution is only applicable to considered service scenarios. For service scenarios that are not considered, the weight coefficient cannot be changed. This solution is applicable to all service scenarios, and a generalization capability is limited. In addition, when a service scenario changes (for example, from a safe scenario to a dangerous scenario), the weight coefficient is prone to a sudden jump. Such discontinuous weight changes may cause stratified and fragmented sensitivity of avoidance control, for example, sudden sensitive avoidance control (a sharp turn) or sudden slow avoidance control. Consequently, stability of autonomous driving of the intelligent device cannot be ensured. When this solution is applied to an autonomous driving vehicle, passenger experience of a user in the vehicle is also affected.

In view of this, an embodiment of this application provides an avoidance control method. An outer soft constraint of avoidance control may be determined based on appearance information of a target object in a surrounding environment of an intelligent device, where the outer soft constraint indicates a first passing area in which the target object can be avoided. An inner soft constraint of avoidance control may be determined based on the appearance information and speed information of the target object, where the inner soft constraint indicates a second passing area that is in the first passing area and in which the intelligent device can be away from the target object. Then, an avoidance policy of the intelligent device is determined based on the outer soft constraint and the inner soft constraint. In this way, passing range constraints of different risk levels of avoiding the target object and being away from the target object are combined, so that the intelligent device can properly avoid the target object.

According to the avoidance control method provided in this embodiment of this application, the inner and outer constraint conditions of avoidance control are established, so that when avoiding the target object, the intelligent device can tend to avoid the target object in a direction away from the target object. This reflects human-like behavior of being away from a potential risk. In addition, because the constraint conditions are soft constraints, the constraints do not need to be strictly met, but need to be met as much as possible, and may be understood as a priority and a preference. Therefore, the avoidance policy of the intelligent device allows a specific degree of violation of the inner soft constraint, and a case in which no decision can be made does not occur. In addition, even if the inner soft constraint is violated, an objective of avoiding the target object is also achieved under the outer soft constraint.

Solutions in embodiments of this application may be applied to the intelligent device. The intelligent device may be an autonomous driving vehicle, a robot, or another electronic device having an autonomous driving capability. This is not limited in embodiments of this application. In some embodiments, the solutions in embodiments of this application may also be applied to another device (for example, a cloud server or a mobile phone terminal) that has a function of controlling the foregoing intelligent device. The intelligent device or another device may implement, by using components (including hardware and software) included in the intelligent device or the another device, the avoidance control method provided in embodiments of this application.

The following schematically describes the solutions provided in embodiments of this application by using an example in which the intelligent device is an autonomous driving vehicle (hereinafter referred to as a vehicle).

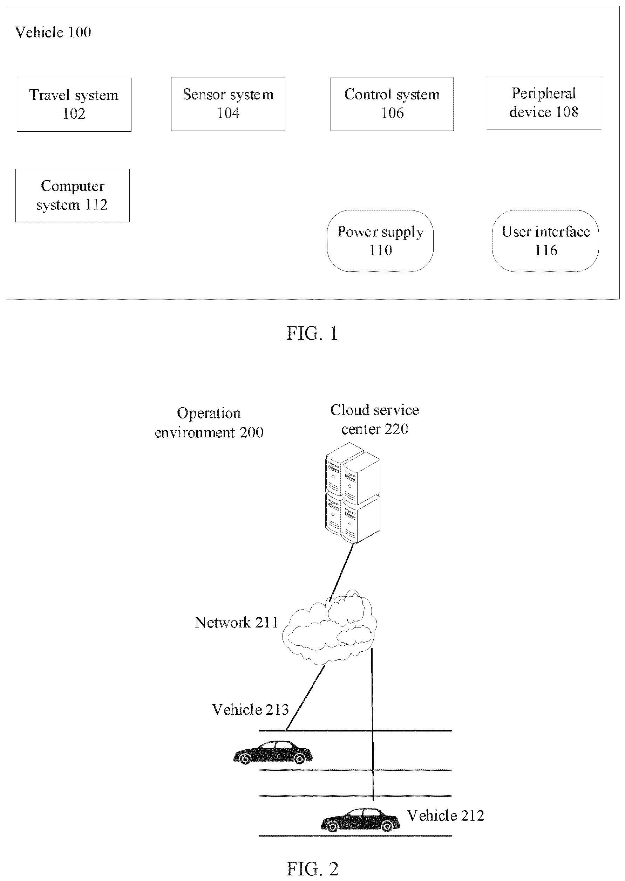

FIG. 1 is a functional block diagram of a vehicle 100 according to an embodiment of this application. The vehicle 100 may include various devices, components, and the like disposed in the vehicle 100 and/or a body of the vehicle 100. In an embodiment, the devices and the components disposed in the vehicle 100 may include but are not limited to an autonomous driving system and an autonomous driving function application. It may be understood that an autonomous driving system is usually disposed in a vehicle having a specific autonomous driving capability.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of elements. In addition, each subsystem and element of the vehicle 100 may be interconnected in a wired or wireless manner.

The sensor system 104 (also referred to as a "collection device") may include several sensors configured to sense information about a surrounding environment of the vehicle 100. For example, the sensor system 104 may include a positioning system (the positioning system may be a global positioning system (global positioning system, GPS), or may be a BeiDou system or another positioning system), an inertial measurement unit (inertial measurement unit, IMU), a radar, a laser rangefinder, and a camera. The sensor system 104 may further include a sensor (such as a vehicle-mounted air quality monitor or a fuel gauge) of an internal system of the monitored vehicle 100. Sensor data from one or more of these sensors may be used to detect an object and corresponding features (such as a location, a shape, a direction, and a speed) of the object. This detection and recognition are key functions of a safe operation of autonomous driving of the vehicle 100.

The positioning system may be configured to estimate a geographical location of the vehicle 100. The IMU may be configured to sense location and orientation changes of the vehicle 100 based on an inertial acceleration. In an embodiment, the IMU may be a combination of an accelerometer and a gyroscope.

The radar may sense, by using a radio signal, an object in the surrounding environment of the vehicle 100, for example, various types of dynamic obstacles such as a pedestrian, a rider (that is, a bicycle rider), a motorcycle, and another vehicle, and static obstacles such as a curb, a fence, and a flowerbed. In some embodiments, in addition to sensing an object, the radar may be further configured to sense one or more states of a speed, a location, and a forward direction of the object.

The laser rangefinder may sense, by using a laser, an object in an environment in which the vehicle 100 is located. In some embodiments, the laser rangefinder may include one or more laser sources, a laser scanner, one or more detectors, and another system component.

The camera may be configured to capture a plurality of images of the surrounding environment of the vehicle 100. The camera may be a static camera or a video camera.

The control system 106 controls operations of the vehicle 100 and components of the vehicle 100. The control system 106 may include various elements, such as a steering system, an accelerator, a braking unit, a computer vision system, a route planning system, and an avoidance control system. The steering system may be operated to adjust a forward direction of the vehicle 100. Optionally, the steering system may be a steering wheel system. The accelerator may be configured to: control an operating speed of an engine and further control a speed of the vehicle 100. The braking unit may be configured to control the vehicle 100 to decelerate.

The computer vision system may process and analyze an image captured by the camera, to recognize various types of objects and/or features in the surrounding environment of the vehicle 100. The computer vision system may use an object recognition algorithm, a structure from motion (structure from motion, SFM) algorithm, video tracking, and another computer vision technology. In some embodiments, the computer vision system may be configured to: draw a map for an environment, track an object, estimate a speed of an object, and the like.

The route control system is configured to determine a driving route of the vehicle 100. In some embodiments, the route control system may determine the driving route for the vehicle 100 with reference to data from the sensor, the GPS, and one or more predetermined maps.

The avoidance control system is configured to recognize, evaluate, and avoid or bypass, in another manner, an obstacle in an environment of the vehicle 100.

Certainly, in an example, the control system 106 may add or alternatively include components other than the foregoing components. Alternatively, some of the foregoing components may be reduced.

The vehicle 100 interacts with an external sensor, another vehicle, another computer system, or a user through the peripheral device 108. The peripheral device 108 may include a wireless communication system, a vehicle-mounted computer, a microphone, and/or a speaker.

Some or all functions of the vehicle 100 are controlled by the computer system 112. The computer system 112 may include at least one processor. The processor executes instructions stored in a non-transient computer-readable medium such as a data memory. The computer system 112 may alternatively be a plurality of computing devices that control individual components or subsystems of the vehicle 100 in a distributed manner.

The processor may include one or more processing units. For example, the processor may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

In some embodiments, the memory may include instructions (for example, program logic), and the instructions may be executed by the processor to perform various functions of the vehicle 100, including the functions described above. The memory may also include additional instructions, including instructions for sending data to, receiving data from, interacting with, and/or controlling one or more of the travel system 102, the sensor system 104, the control system 106, and the peripheral device 108. In addition to the instructions, the memory may further store data, for example, a road map, route information, vehicle data such as a location, a direction, and a speed of a vehicle, and other information such as locations, orientations, and speeds of various objects in the surrounding environment of the vehicle. The information may be used by the vehicle 100, the computer system 112, and the control system 106 during operation of the vehicle 100 in autonomous, semi-autonomous, and/or manual modes.

For example, the memory may obtain information about an object in the surrounding environment obtained by the vehicle 100 based on a sensor in the sensor system 104, for example, information such as a location, a contour, a size, and a speed of an obstacle such as another vehicle or a pedestrian, and a distance between the obstacle and the vehicle 100. The memory may further obtain environment information from the sensor system 104 or another component of the vehicle 100. The environment information may be, for example, whether there is a greenbelt, a lane, a pedestrian, or the like near an environment in which the vehicle is currently located, or the vehicle calculates, by using a machine learning algorithm, whether there is a greenbelt, a lane, a pedestrian, or the like near an environment in which the vehicle is currently located. In addition to the foregoing content, the memory may further store status information of the vehicle and status information of a target object (a pedestrian, another vehicle, or the like) that interacts with the vehicle. The status information of the vehicle includes but is not limited to a location, a speed, an acceleration, a heading angle, and the like of the vehicle.

In some embodiments, the processor may further perform the avoidance control method in this embodiment of this application, to avoid in a direction away from the target object as far as possible during avoidance. For example, the processor may obtain the foregoing information from the memory, determine an outer soft constraint of avoidance control based on appearance information of the target object, and determine an inner soft constraint of avoidance control based on the appearance information and speed information of the target object, to determine an avoidance policy of the intelligent device based on the outer soft constraint and the inner soft constraint. For a specific avoidance control method, refer to the following description.

The computer system 112 may control functions of the vehicle 100 based on inputs received from various subsystems (for example, the travel system 102, the sensor system 104, and the control system 106) and from the user interface 116. For example, the computer system 112 may use an input from the control system 106 to control the steering unit to avoid an obstacle detected by the avoidance control system. In some embodiments, the computer system 112 may provide control on many aspects of the vehicle 100 and the subsystems of the vehicle 100.

The avoidance control system may establish the inner and outer constraint conditions of avoidance control based on the appearance information of the target object and a speed status of the target object that are input from various subsystems (for example, the travel system 102, the sensor system 104, and the control system 106), to implement avoidance control of different risk levels of the vehicle 100.

It may be understood that the structure shown in FIG. 1 is merely an example, and does not limit a structure of the vehicle in this embodiment of this application. In some other embodiments of this application, the vehicle 100 may include more or fewer components than those shown in the figure, or some components may be combined, or some components may be split, or there may be a different component arrangement, or there may be a different configuration with equivalent or more functions than those shown in FIG. 1. The components shown in the figure may be implemented by hardware, software, or a combination of software and hardware.

An autonomous vehicle traveling on a road, for example, the foregoing vehicle 100, may determine an adjustment instruction for a current speed based on the object in the surrounding environment of the vehicle. The object in the surrounding environment of the vehicle 100 may be another type of static object such as a traffic control device or a greenbelt, or may be various types of dynamic object of such as a pedestrian, a rider, a motorcycle, or another vehicle. In some examples, the vehicle 100 may independently consider each object in the surrounding environment, and determine a speed adjustment instruction of the vehicle 100 based on respective features of each object, such as a current speed, acceleration, and a distance between the object and the vehicle.

Optionally, the vehicle 100 used as the autonomous driving vehicle or a computer device (such as the computer system 112, the computer vision system, or the memory) associated with the vehicle 100 may construct, based on an appearance characteristic and a speed characteristic of a recognized object, passing range constraints of different risk levels of avoiding the target object and being away from the target object, so that when avoiding the target object, the intelligent device can tend to avoid the target object in a direction away from the target object.

In addition to providing instructions for adjusting the speed of the autonomous driving vehicle, the computer device may further provide an instruction for modifying a steering angle of the vehicle 100, so that the autonomous driving vehicle follows a given trajectory and/or maintains safe horizontal and vertical distances between the autonomous driving vehicle and a near object (for example, a car in a neighboring lane).

It should be understood that the vehicle 100 may be a car, a truck, a motorcycle, a bus, a boat, an airplane, a helicopter, a lawn mower, an entertainment vehicle, a playground vehicle, a construction device, a tram, a golf cart, a train, a trolley, or the like. This is not specifically limited in embodiments of this application. For example, the vehicle 100 may also be an intelligent vehicle, an intelligent robot, or the like that has an autonomous driving capability in a smart home field.

In some other embodiments of this application, the autonomous driving vehicle may further include a hardware structure and/or a software module, and implement the functions in a form of the hardware structure, the software module, or a combination of the hardware structure and the software module. Whether a function in the foregoing functions is enabled by using the hardware structure, the software module, or the combination of the hardware structure and the software module depends on particular applications and design constraint conditions of the technical solutions.

In a possible implementation, the computer system 112 shown in FIG. 1 may include a processor. The processor is coupled to a system bus. The processor may be one or more processors, and each processor may include one or more processor cores. A video adapter (video adapter) may drive a display, and the display is coupled to the system bus. The system bus is coupled to an input/output (input/output, I/O) bus (bus) through a bus bridge, an I/O interface is coupled to an I/O bus, and the I/O interface communicates with a plurality of I/O devices, such as an input device (such as a keyboard, a mouse, and a touchscreen) and a media tray (media tray) (such as a multimedia interface). A transceiver (which may send and/or receive a radio communication signal), a camera (which may capture static and dynamic digital video images), and an external universal serial bus (universal serial bus, USB) port are further included. Optionally, an interface connected to the I/O interface may be a USB interface.

The processor may be any conventional processor, including a reduced instruction set computer (reduced instruction set computer, RISC) processor, a complex instruction set computer (complex instruction set computer, CISC) processor, or a combination thereof. Optionally, the processor may alternatively be a dedicated apparatus such as an application-specific integrated circuit (application-specific integrated circuit, ASIC). Optionally, the processor may alternatively be a neural network processor or a combination of a neural network processor and the foregoing conventional processor.

Optionally, in various embodiments of this application, the computer system 112 may be located at a place away from the autonomous driving vehicle, and may wirelessly communicate with the autonomous driving vehicle. In another aspect, some processes described in this application may be performed on a processor disposed in the autonomous driving vehicle, and some other processes, including taking an action required to perform a single operation, are performed by a remote processor.

The computer system 112 may communicate with a software deploying server (deploying server) through a network interface. Optionally, the network interface may be a hardware network interface, for example, a network interface card. The network (network) may be an external network such as the Internet, or may be an internal network such as the Ethernet or a virtual private network (virtual private network, VPN). Optionally, the network may alternatively be a wireless network such as a wireless fidelity (wireless fidelity, Wi-Fi) network or a cellular network.

In some other embodiments of this application, the computer system 112 may further receive information from or transfer information to another computer system. Alternatively, sensor data collected from the sensor system 104 of the vehicle 100 may be transferred to another computer, and the another computer processes the data. Data from the computer system 112 may be transferred to a cloud-side computer system via a network for further processing. In one example, the computer system 112 may include a server with a plurality of computers, for example, a load balancing server cluster.

FIG. 2 is an example of interaction between an autonomous driving vehicle and a cloud service center (cloud server). The cloud service center 220 may receive information (such as data collected by a vehicle sensor or other information) from a vehicle 213 and a vehicle 212 in an operating environment 200 of the cloud service center 220 via a network 211 such as a wireless communication network. The vehicle 213 and the vehicle 212 may be autonomous driving vehicles.

The cloud service center 220 runs, based on received data, a program that is stored in the cloud service center 220 and that is related to control of autonomous driving of the vehicle, to control the vehicle 213 and the vehicle 212. The program related to control of autonomous driving of the vehicle may be a program for managing interaction between the autonomous driving vehicle and an obstacle on a road, or a program for controlling a route or a speed of the autonomous driving vehicle, or a program for controlling interaction between the autonomous driving vehicle and another autonomous driving vehicle on a road.

For example, the cloud service center 220 may provide a part of a map to the vehicle 213 and the vehicle 212 via the network 211. In another example, operations may be divided between different locations. For example, a plurality of cloud service centers may receive, validate, combine, and/or send information reports. In some examples, information reports and/or sensor data may alternatively be sent between vehicles. Another configuration is also possible.

In some examples, the cloud service center 220 sends, to the autonomous driving vehicle, a solution (for example, informing a front obstacle and informing how to bypass the obstacle) that is suggested based on a possible driving situation in an environment. For example, the cloud service center 220 may assist the vehicle in determining how to travel when facing a specific obstacle in the environment. For example, the cloud service center 220 may construct, based on appearance information and vehicle speed information of the obstacle, passing range constraints of two risk levels of avoiding a target object and being away from the target object, and determine an avoidance policy of the vehicle based on two layers of constraints. The cloud service center 220 may send, based on the avoidance policy, a suggested operation mode (for example, indicating an avoidance path of the vehicle) used by the vehicle to pass through the obstacle.

All methods in the following embodiments may be implemented in a vehicle having the foregoing hardware structure or another device having a vehicle control function. For example, the autonomous driving vehicle may be a processor in the vehicle or another device having the vehicle control function, for example, the processor in the cloud service center 220 mentioned in the foregoing content.

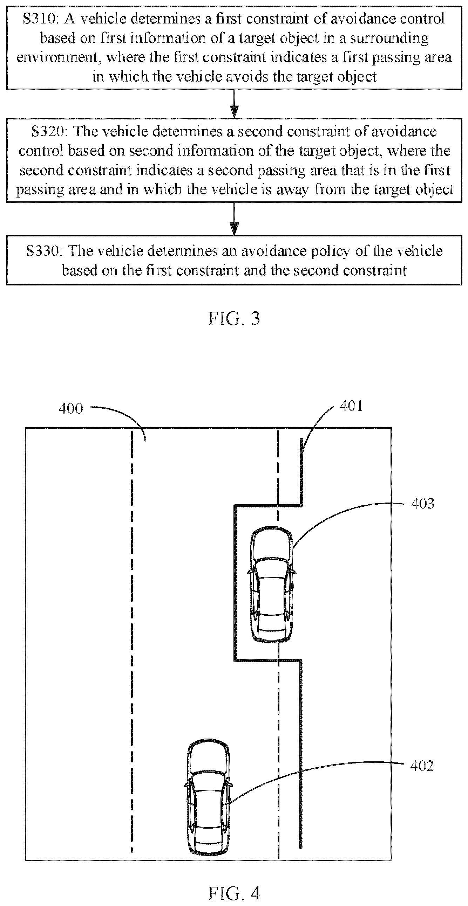

An example in which an intelligent device is an autonomous driving vehicle (hereinafter referred to as a vehicle) is used below to describe an avoidance control method provided in an embodiment of this application with reference to the accompanying drawings. As shown in FIG. 3, the avoidance control method may include the following steps.

S310: The vehicle determines a first constraint of avoidance control based on first information of a target object in a surrounding environment, where the first constraint indicates a first passing area in which the vehicle avoids the target object.

The target object may include a dynamic obstacle and/or a static obstacle in the surrounding environment of the vehicle. The dynamic obstacle may include a traffic participant object in a moving state, such as a pedestrian, a rider, a motorcycle, or another vehicle. The static obstacle may include a curb, a fence, a flowerbed, other vehicles parked on two sides of a road, or the like. In this embodiment of this application, for ease of differentiation, a vehicle to which the avoidance control method is applied may be referred to as an ego vehicle, and another vehicle in the surrounding environment of the ego vehicle is referred to as another vehicle.

Optionally, the first information of the target object may include appearance information of the target object. The appearance information of the target object may include a location, a contour (or a boundary shape), a size, and the like of the target object. Optionally, the first information may also include a distance between the target object and the ego vehicle.

Optionally, the first information of the target object is detected by a sensor module of the vehicle. As an implementation, the sensor module may include a radar (such as a lidar or a millimeter-wave radar), a laser rangefinder, a camera, or the like.

The vehicle may determine a constraint condition of avoidance control based on the target object in the surrounding environment, to determine an avoidance policy of the vehicle based on the constraint condition, for example, determine a passable area in which avoidance can be implemented, or determine an avoidance path. The constraint condition of the avoidance control may be a limitation condition set to achieve an avoidance objective.

Optionally, the vehicle determines the first constraint of avoidance control based on the first information of the target object in the surrounding environment. The first constraint indicates the first passing area in which the vehicle avoids the target object. In other words, it may be understood that a first limitation condition is set to achieve an objective of avoiding the target object, and under the first limitation condition, the passable area of the vehicle may be limited to the first passing area.

In this embodiment of this application, the first constraint is a constraint condition that constrains the vehicle to avoid the target object and ensures that the vehicle does not collide with the target object. As a manner, the vehicle may determine the first constraint based on the location and the contour of the target object. The first constraint may constrain a distance between the ego vehicle and the target object to be greater than a first preset distance. The first constraint may constrain the passable area of the vehicle to an area beyond the first preset distance of the target object.

The first preset distance may be properly set based on a specific scenario. This is not limited in embodiments of this application. For example, the first preset distance may be a minimum distance between the ego vehicle and the target object when the vehicle safely avoids an area in which the target object is located, for example, may be 10 cm or 20 cm.

In some embodiments, the vehicle may determine boundary information of the first constraint, that is, a boundary of the first passing area. The vehicle may display the boundary information of the first constraint on a vehicle-mounted display. A display manner may include but is not limited to color display (for example, orange, green, or blue), line display (for example, a solid line or a dashed line), blinking display, static display, or the like. The display manner of the boundary information of the first constraint is not limited in embodiments of this application.

As an example, the vehicle may display a live image including the boundary information of the first constraint. Optionally, the vehicle may obtain the live image of the surrounding environment of the ego vehicle, and display the boundary information of the first constraint at a corresponding location in the live image. A user is visually prompted to pay attention to a boundary of the first constraint around the ego vehicle, so that the user can know a passable area and an intention in which the vehicle avoids an obstacle, and has an expectation for avoidance behavior of the vehicle.

For example, as shown in FIG. 4, a live image 400 around the ego vehicle is displayed on the display, and a boundary 401 of the first constraint is displayed at a corresponding location in the live image 400. The boundary of the first constraint is used to constrain the ego vehicle 402 to pass in a manner of avoiding an area in which another vehicle 403 is located.

In some embodiments, the vehicle may alternatively determine the first passing area based on the boundary information of the first constraint. The vehicle may display the first passing area on the vehicle-mounted display. The display manner may include but is not limited to color display (for example, green), line display (for example, a solid line), blinking display, static display, and the like. A display manner of the first passing area is not limited in embodiments of this application.

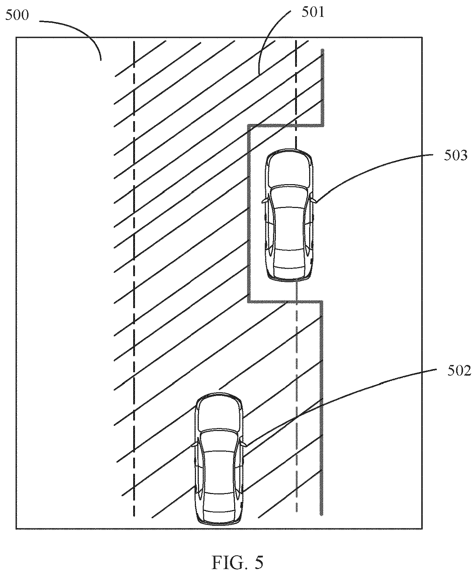

For example, as shown in FIG. 5, a live image 500 around the ego vehicle is displayed on the display, and a first passing area 501 (namely, a hatching area) constrained by the first constraint is displayed at a corresponding location in the live image 500. In this way, the passing area displayed when the first constraint constrains the ego vehicle 502 to avoid another vehicle 503 is presented to the user in a vivid and intuitive manner.

In some embodiments, the vehicle may also determine a first dangerous area outside the boundary of the first constraint, and the first dangerous area may be understood as an area in which the vehicle is likely to collide with the target object. The vehicle may display the first dangerous area on the vehicle-mounted display, to warn the user of a dangerous driving area around the ego vehicle.

The display manner may include but is not limited to color display (for example, a warning color red), line display (for example, a thick solid line), blinking display, static display, and the like. The display manner of the first dangerous area is not limited in embodiments of this application.

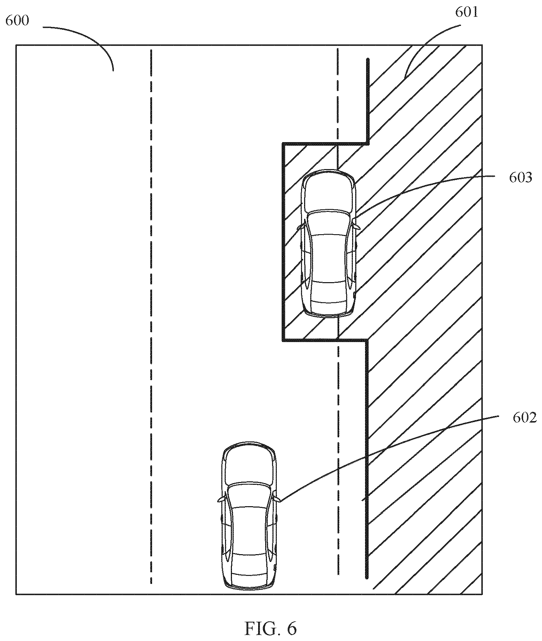

For example, as shown in FIG. 6, a live image 600 around the ego vehicle is displayed on the display, and a first dangerous area 601 (namely, a hatching area) outside the boundary of the first constraint is displayed at a corresponding location in the live image 600. In this way, a dangerous area, outside the constraint boundary of the first constraint, in which an ego vehicle 602 is likely to collide with another vehicle 603 is presented to the user in a vivid and intuitive manner.

It should be noted that FIG. 4, FIG. 5, and FIG. 6 are merely simple diagrams, to describe a display effect.

Optionally, the first constraint is a constraint condition with an attribute of a soft constraint. The soft constraint may constrain passing of the vehicle. However, in a special case, the vehicle may pass through a passing area indicated by a boundary of the soft constraint. It may also be understood that the soft constraint may allow a specific degree of violation. However, the vehicle cannot pass a passing area indicated by a boundary of a hard constraint.

Optionally, the first constraint is a constraint condition with an attribute of a hard constraint.

In this embodiment of this application, the first constraint of avoidance control is generated in real time based on an update of the target object in the surrounding environment of the ego vehicle. In other words, as the ego vehicle moves, the surrounding environment of the ego vehicle also changes accordingly, and correspondingly, the determined first constraint is also refreshed in real time as the ego vehicle moves.

Optionally, when there are a plurality of target objects around the ego vehicle, the vehicle determines the first constraint of avoidance control based on first information of the plurality of target objects, to constrain the vehicle to avoid the plurality of target objects, and ensure that the vehicle does not collide with the plurality of target objects.

For example, when there are a target object 1 and a target object 2 around the ego vehicle, the vehicle may determine the first constraint based on locations and contours of the target object 1 and the target object 2. The first constraint may constrain a distance between the ego vehicle and the target object 1 to be greater than the first preset distance, and constrain a distance between the ego vehicle and the target object 2 to be also greater than the first preset distance. The first constraint may constrain the passable area of the vehicle to an area beyond the first preset distance of the target object 1 and beyond the first preset distance of the target object 2.

S320: The vehicle determines a second constraint of avoidance control based on second information of the target object, where the second constraint indicates a second passing area that is in the first passing area and in which the vehicle is away from the target object.

Optionally, the second information of the target object may include the appearance information and speed information of the target object. The speed information of the target object is a speed magnitude, a speed direction, and the like of the target object. Optionally, the speed information of the target object is detected by the sensor module of the vehicle. As an implementation, the sensor module may include a radar (such as a lidar or a millimeter-wave radar), a laser rangefinder, a camera, or the like. Optionally, the second information of the target object may also include the distance between the target object and the ego vehicle.

In this embodiment of this application, the vehicle may determine the second constraint of avoidance control based on the second information of the target object. The second constraint indicates the second passing area that is in the first passing area and in which the vehicle is away from the target object. It may also be understood that the second passing area is an area in the first passing area, and the second passing area is smaller than the first passing area.

Optionally, the second constraint is a constraint condition that constrains the vehicle to be away from the target object in the first passing area, to ensure that the vehicle tends to avoid in a direction away from the target object.

In some embodiments, the second information of the target object may be the same as the first information of the target object, or may include more information than the first information. That is, the second information of the target object may also include the first information of the target object and other information different from the first information.

Optionally, the other information may be at least one of the speed information of the target object, information about the distance between the target object and the ego vehicle, lane line information of a lane in which the target object is located, a lateral interaction decision of the intelligent device on the target object, or a longitudinal interaction decision of the intelligent device on the target object. Other information is not limited in embodiments of this application.

As a manner, when the first information of the target object is information such as the location and the contour of the target object, the second information of the target object may be the same as the first information of the target object. In this case, the vehicle may determine the second constraint based on the location and the contour of the target object. The second constraint may constrain the distance between the ego vehicle and the target object to be greater than a second preset distance. The second constraint may constrain the passable area of the vehicle to an area beyond the second preset distance of the target object.

The second preset distance is greater than the first preset distance, and a specific value of the second preset distance may be properly set based on a specific scenario. This is not limited in embodiments of this application. In other words, the distance, constrained by the second constraint, by which the vehicle is away from the target object is greater than the distance, constrained by the first constraint, by which the vehicle is away from the target object. For example, the first constraint constrains the vehicle to be 10 cm away from the target object, and a main objective of the first constraint is to avoid the target object to prevent collision. The second constraint may constrain the vehicle to be 60 cm away from the target object, and a main objective of the second constraint is to keep the vehicle away from the target object as far as possible while the target object is avoided.

As a manner, when the first information of the target object is the information such as the location and the contour of the target object, the second information of the target object may include more other information than the first information, for example, the speed information of the target object. In this case, the vehicle may also determine the second constraint of avoidance control based on the location, the contour, and the speed information of the target object.

For example, when the target object is on a right side of the ego vehicle, and the speed direction is leftward, because the target object gradually moves to the left side to approach the ego vehicle, the second constraint may constrain the ego vehicle to move, as far to the left side as possible, away from the target object for a distance as long as possible. For another example, when the target object is on the right side of the ego vehicle and the speed direction is rightward, because the target object gradually move to the right side to be away from the ego vehicle, the second constraint may constrain the ego vehicle to move, as far to the left as possible, away from the target object.

Optionally, the second constraint of avoidance control may alternatively be determined with reference to the speed magnitude. For example, when the target object is on the right side of the ego vehicle, the speed direction is leftward, and the speed is fast, because the target object moves quickly to the left side to approach the ego vehicle, the second constraint may constrain the ego vehicle to move, as far to the left side as possible, away from the target object for a distance as long as possible, and a speed of the ego vehicle for driving to the left is gradually increased.

In some embodiments, the vehicle may alternatively determine the second constraint of avoidance control based on the lateral interaction decision and the speed information of the target object. The second constraint indicates the second passing area, in the first passing area, away from the target object that needs to be laterally avoided.

The lateral interaction decision of the target object is a lateral decision made by the vehicle when facing the target object. The lateral decision is mainly about using means such as turning left and right, to enable the vehicle to bypass the target object as much as possible to continue driving.

As a manner, the vehicle may determine the second constraint based on a direction of the lateral interaction decision and the speed direction of the target object. The second constraint may be: when the direction of the lateral interaction decision is the same as the speed direction of the target object, increasing strength of the lateral interaction decision; or when the direction of the lateral interaction decision is opposite to the speed direction of the target object, reducing strength of the lateral interaction decision.

For example, another vehicle (the target object) exists on the right side of the ego vehicle, and the lateral interaction decision made by the ego vehicle when facing the another vehicle is turning to the left and moving to the left side to avoid the vehicle. In this case, if a speed direction of the another vehicle is towards the left side, the second constraint of avoidance control determined by the vehicle may be increasing strength of the lateral interaction decision, that is, turning further to the left for a specified distance and moving to the left side to avoid the another vehicle by a greater distance, to be away from the another vehicle, driving towards the left side, as far as possible.

In some embodiments, the vehicle may alternatively determine the second constraint of avoidance control based on the longitudinal interaction decision and the speed information of the target object. The second constraint indicates the second passing area, in the first passing area, away from the target object that needs to be longitudinally avoided.

The longitudinal interaction decision of the target object is a longitudinal decision made by the vehicle when facing the target object. The longitudinal decision is mainly about using means such as front-back acceleration/deceleration and braking, to prevent collision with the target object in front of or behind the vehicle as much as possible. For example, if there is the another vehicle (the target object) in front of the ego vehicle, the ego vehicle does not make any lateral interaction decision with respect to the another vehicle in front of the vehicle, and only performs longitudinal following.

As a manner, the vehicle may alternatively determine the second constraint based on a direction of the longitudinal interaction decision and the speed direction of the target object.

In a possible implementation, in the second constraint, the location, the contour, and the speed information of the target object may be considered, to constrain the ego vehicle to be away from the target object as far as possible, or may consider a lateral interaction policy and/or a longitudinal interaction policy of the target object at the same time, to constrain the ego vehicle to be away from the longitudinally interacted target object.

It may be understood that, in addition to the location, the contour, and the speed information of the target object, and the lateral interaction policy and/or the longitudinal interaction policy of the target object, other information may also be considered in the second information used to determine the second constraint, to narrow the passable area of the vehicle to a most proper and safest area as much as possible. For example, in the second constraint, lane line information of a road may also be considered, to constrain the ego vehicle to travel in a lane line while constraining the ego vehicle to be away from the target object.

In some embodiments, the vehicle may determine, based on the determined second constraint, boundary information of the second constraint, that is, a boundary of the second passing area. The vehicle may display the boundary information of the second constraint on the vehicle-mounted display. The display manner may include but is not limited to color display, line display (for example, a dashed line), blinking display, static display, and the like. The display manner of the boundary information of the second constraint is not limited in embodiments of this application.

As an example, the vehicle may display a live image including the boundary information of the second constraint. Optionally, the vehicle may obtain the live image of the surrounding environment of the ego vehicle, and display the boundary information of the second constraint at a corresponding location in the live image. The user is visually prompted to pay attention to a boundary of the second constraint around the ego vehicle, so that the user can know a passable area and an intention in which the vehicle is away from an obstacle, and has an expectation for avoidance behavior of the vehicle.

In some embodiments, the vehicle may display the boundary information of the first constraint and the second constraint at the same time, to implement constraint boundary display of two risk levels of avoiding the obstacle and being away from the obstacle. The user is visually prompted to pay attention to two layers of constraint boundaries around the ego vehicle.

Optionally, the vehicle displays the boundary information of the first constraint and the second constraint in different display states, to intuitively present the constraint boundaries of different risk levels.

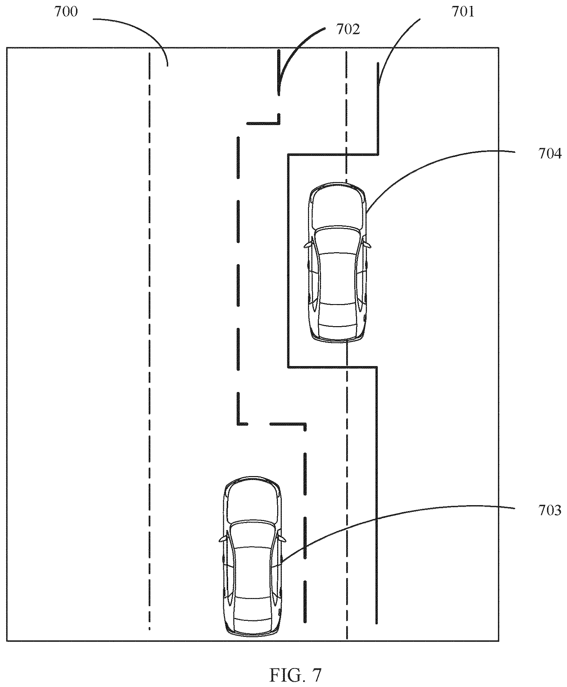

For example, as shown in FIG. 7, a live image 700 around the ego vehicle is displayed on the display, and a boundary 701 of the first constraint and a boundary 702 of the second constraint are displayed at corresponding locations in the live image 700. The boundary 701 of the first constraint is used to constrain the ego vehicle 703 to pass in a manner of avoiding an area in which the another vehicle 704 is located, and the boundary 702 of the first constraint is used to constrain the ego vehicle 703 to pass away from the area in which the another vehicle 704 is located while avoiding the area in which the another vehicle 704 is located.

In some embodiments, the vehicle may alternatively determine the second passing area based on the boundary information of the second constraint. The vehicle may display the second passing area on the vehicle-mounted display. The display manner may include but is not limited to color display (for example, blue), line display, blinking display, static display, and the like. The display manner of the second passing area is not limited in embodiments of this application.

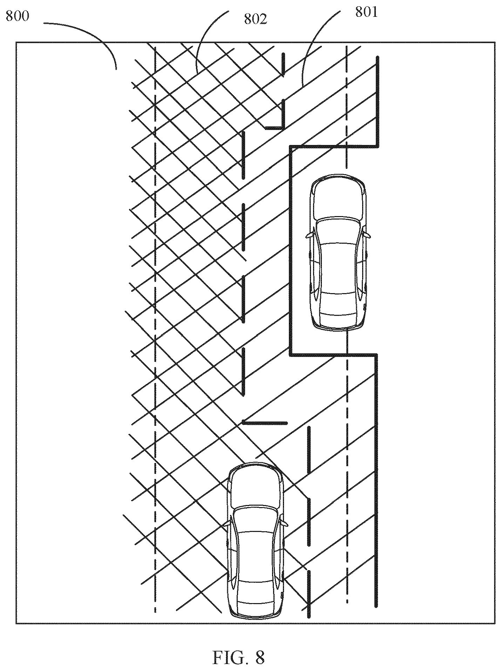

For example, as shown in FIG. 8, a live image 800 around the ego vehicle is displayed on the display, and a first passing area 801 (namely, a single hatching area and a double hatching area) constrained by the first constraint and a second passing area 802 (namely, the double hatching area) constrained by the second constraint are displayed at corresponding locations in the live image 800. In this way, passing areas of different risk levels are presented to the user in a vivid and intuitive manner.

Optionally, the vehicle displays the first passing area and the second passing area in different display states, to intuitively present the passing areas of different risk levels.

In some embodiments, the vehicle may alternatively determine, based on the boundary information of the first constraint and the second constraint, a second dangerous area outside the boundary of the second constraint and inside the boundary of the first constraint. The second dangerous area may be understood as an area in which the vehicle can avoid the target object but the vehicle is close to the target object.

It may be understood that, because the second dangerous area is still inside the constraint boundary of the first constraint, the second dangerous area is less dangerous than the first dangerous area outside the boundary of the first constraint, but still has a risk. Therefore, the first dangerous area (a high-risk area) and the second dangerous area (a medium-risk area) are driving areas of different risk levels.

Optionally, the vehicle displays the second dangerous area on the vehicle-mounted display, to warn the user of a dangerous driving area around the ego vehicle. The display manner may include but is not limited to color display (for example, a warning color orange), line display, blinking display, static display, and the like. The display manner of the second dangerous area is not limited in embodiments of this application.

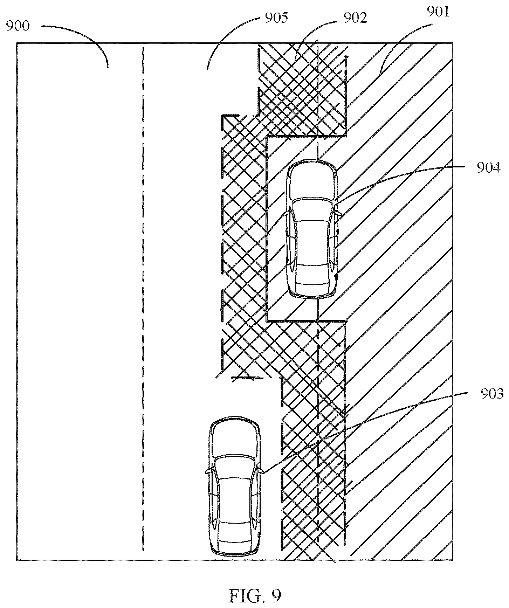

For example, as shown in FIG. 9, a live image 900 around the ego vehicle is displayed on the display, and a first dangerous area 901 (namely, a single hatching area) outside the boundary of the first constraint and a second dangerous area 902 inside the boundary of the first constraint and outside the boundary of the second constraint are displayed at corresponding locations in the live image 900. In this way, a high-risk area (namely, the first dangerous area 901), outside the constraint boundary of the first constraint, in which the ego vehicle 903 is likely to collide with another vehicle 904 and a medium-risk area (namely, the second dangerous area 902), inside the constraint boundary of the first constraint, in which the ego vehicle 903 can avoid the another vehicle 904 but the ego vehicle 903 is close to the another vehicle 904 are presented to the user in a vivid and intuitive manner. Optionally, a low-risk area 905 other than the first dangerous area 901 and the second dangerous area 902 may also be displayed in the live image 900, to present to the user that the ego vehicle 903 also tends to move to the low-risk area away from the another vehicle 904 while avoiding the another vehicle 904.

Optionally, the vehicle displays the first dangerous area and the second dangerous area in different display states, or displays the first dangerous area, the second dangerous area, and the low-risk area in different display states, to intuitively present dangerous areas of different risk levels. As a manner, the first dangerous area, the second dangerous area, and the low-risk area may be distinguished by using different colors. For example, the first dangerous area is displayed in red, the second dangerous area is displayed in orange, and the low-risk area is displayed in green.

It should be noted that FIG. 7, FIG. 8, and FIG. 9 are merely simple diagrams, to describe a display effect.

S330: The vehicle determines the avoidance policy of the vehicle based on the first constraint and the second constraint.

In some embodiments, the vehicle may establish a dynamics model, and establish a model predictive control (model predictive control, MPC) algorithm-based MPC model based on the dynamics model, to determine the avoidance policy of the vehicle by using the MPC algorithm, for example, determine an optimal avoidance path of the vehicle.

The MPC algorithm is closed-loop optimization control, and a main idea of the MPC algorithm is to predict a future state variable (or an output) of a system at a sampling moment k based on a current state variable, a system model, a cost function, and a constraint condition, calculate a control input sequence, and apply a first control input of the obtained input sequence to an actual system. At a next sampling moment k+1, the system status is re-sampled, and an operation at the moment k is repeated. That is, optimal avoidance behavior and/or an optimal avoidance path of the vehicle at a future moment may be inferred by using the MPC algorithm.

The constraint conditions of the MPC model may be the first constraint and the second constraint. That is, the MPC model may solve the optimal avoidance path under the constraint conditions of the first constraint and the second constraint.

Optionally, the vehicle displays, on the vehicle-mounted display, the optimal avoidance path output by the MPC model.

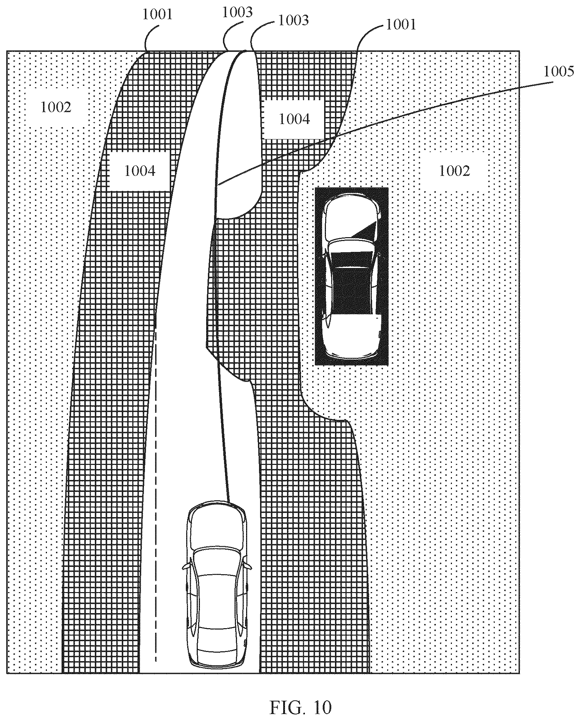

For example, refer to FIG. 10. A live image of a surrounding environment of the ego vehicle is displayed on the display, and a first dangerous area 1002 outside a boundary 1001 of the first constraint and a second dangerous area 1004 inside the boundary 1001 of the first constraint and outside a boundary 1003 of the second constraint are displayed at corresponding locations in the live image. In this way, areas of different risk levels are presented to the user in a vivid and intuitive manner. Optionally, an optimal avoidance path 1005 output by the MPC model may also be displayed in the live image, to present an optimization result of the MPC model to the user.

Optionally, because the second constraint is a condition with the attribute of the soft constraint, the optimization result of the MPC model may allow a specific degree of violation of the boundary of the second constraint. As shown in FIG. 10, a part of the optimal avoidance path 1005 output by the MPC model passes through the boundary 1003 of the second constraint, and is located in the second dangerous area 1004.

The dynamics model of the vehicle is used to represent a change rule of a motion status of the vehicle, namely, a relationship between a force applied to the vehicle and a motion status change of the vehicle. A motion status of the vehicle at a future moment may be predicted based on the dynamics module of the vehicle.

Optionally, the dynamics model of the vehicle may be classified into a lateral dynamics model and a longitudinal dynamics model. The lateral dynamics model is used to represent a relationship between a lateral force applied to the vehicle and a lateral motion status change of the vehicle, and the longitudinal dynamics model is used to represent a relationship between a longitudinal force applied to the vehicle and a longitudinal motion status change of the vehicle. In a possible implementation, there is a relationship of coupling between the lateral dynamics model of the vehicle and the longitudinal dynamics model of the vehicle.

In a possible implementation, the lateral dynamics model of the vehicle is a function about a change rate of a location of the vehicle (namely, a location of a center of mass of the vehicle), a change rate of a side-slip angle of the center of mass of the vehicle, a change rate of a yaw angle of the vehicle, a change rate of a yaw angular velocity of the vehicle, a change rate of a front wheel angle, and an association relationship between the change rates. The longitudinal dynamics model of the vehicle is a function about a change rate of a longitudinal speed of the vehicle, a change rate of a front wheel angular velocity, a change rate of a rear wheel angular velocity (that is, an angular velocity of drive wheels), and an association relationship between the change rates.

In some embodiments, the vehicle may set a penalty coefficient for violating the first constraint to a first threshold, and set a penalty coefficient for violating the second constraint to a second threshold. The penalty coefficient is a calculation amount used to optimize the cost function in the MPC model. In this way, the vehicle may establish a planning control model by using control precision and driving comfort as optimization objectives, to control a planned path of the vehicle.

The first threshold is greater than the second threshold. The first threshold and the second threshold may be properly set based on an application scenario, and may be prestored in a memory of the vehicle.

It may be understood that, the penalty coefficient for violating the first constraint is set to a larger value, so that it can be ensured, as much as possible, that the optimization result of the model is within the first passable area (an area that meets the first constraint), that is, the planned path of the vehicle is prevented as much as possible from falling into a high-risk area in which the vehicle is prone to collision with the target object.

The penalty coefficient for violating the second constraint is set to a smaller value, so that it can be ensured, as much as possible, that the optimization result of the model is within the second passable area (an area that meets the second constraint), that is, the planned path of the vehicle is planned, as much as possible, in the direction away from the target object, but may occasionally appear in an impassable area (an area that does not meet the second constraint). Because a value of the penalty coefficient for violating the second constraint is not very large, when avoidance control is performed based on the second constraint, avoidance is not performed based on a passable area of the second constraint to an extreme extent.

In this way, in consideration of environmental hazards, stability of avoidance (lateral avoidance and/or longitudinal avoidance) can be considered at the same time, and the avoidance comfort and emergency avoidance are naturally integrated, so that the vehicle controls to find a good balance point between the emergency avoidance and excellent lateral and/or longitudinal driving performance.

In some embodiments, the optimization objectives may further include a lateral tracking deviation, a heading tracking deviation, a lateral acceleration of the ego vehicle, and the like of the planned path. In this way, when conflict inevitably occur because of a model constraint, a vehicle control target, and planning, deviation of the vehicle control is allowed, and the deviation naturally tends to a side with a lower risk.

The following describes, with reference to several specific scenarios, the avoidance control method provided in this embodiment of this application.

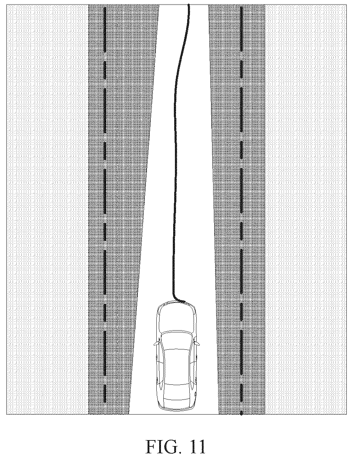

In some scenarios, in a process in which a vehicle drives straight automatically, when there is no other vehicle around the ego vehicle, a control deviation exists in the ego vehicle. When a planning control system of the vehicle performs vehicle control, because the boundaries of the first constraint and the second constraint are not violated, the ego vehicle performs control with reference to the planned path and driving comfort. A control error of the ego vehicle is naturally distributed on the planned path. In this way, on an open road, a specific vehicle control precision error is allowed, and lateral stability is high. Optionally, as shown in FIG. 11, the vehicle may display a planned trajectory of the ego vehicle on the display, or may display passable areas, of different risk levels, constituted by the boundaries of the first constraint and the second constraint.

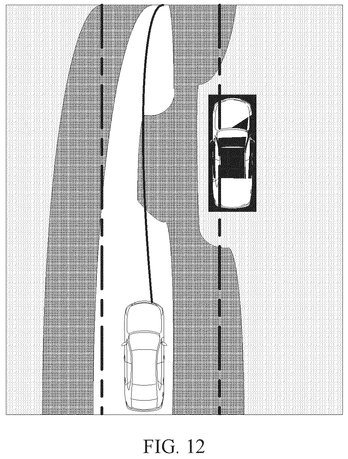

In some scenarios, in a process in which the vehicle drives straight automatically, when there is the target object on the right side of the ego vehicle, for example, when the another vehicle changes a lane and cuts in, a control deviation exists in the ego vehicle. When the planning control system of the vehicle performs vehicle control, because the control of the ego vehicle to the left may violate the boundary of the second constraint, when the ego vehicle performs control with reference to the planned route and driving comfort, the ego vehicle should further be away from the boundary of the second constraint as far as possible. The control error of the ego vehicle is distributed on the left side of the planned route, so that the vehicle is away from danger. In this way, when a road condition is congested, and an obstacle exists, vehicle control accuracy of the ego vehicle is improved, lateral obstacle avoidance is agile, and there is no sudden switching of driving experience. Optionally, as shown in FIG. 12, the vehicle may display the planned trajectory of the ego vehicle on the display, or may display the passable areas, of different risk levels, constituted by the boundaries of the first constraint and the second constraint.

It may be understood that, in a scenario in which the target object exists on one side, according to the avoidance control method provided in this application, lateral vehicle control of the vehicle may tend to a side away from a risk. This is more human-like to keep the vehicle away from a potential risk. For example, the ego vehicle passes through an S curve. When there is no other vehicle around the ego vehicle, the ego vehicle may pass tangentially relative to the planned path. When there is the another vehicle, the ego vehicle is away from the another vehicle. In this way, the vehicle may present inconsistent control results based on different environmental hazards.

In conclusion, according to the avoidance control method in this embodiment of this application, the inner and outer constraint conditions of avoidance control are established, so that when avoiding the target object, the intelligent device can tend to avoid the target object in the direction away from the target object. This reflects human-like behavior of being away from a potential risk. In addition, because the constraint conditions are soft constraints, the constraints do not need to be strictly met, but need to be met as much as possible, and may be understood as a priority and a preference. Therefore, the avoidance policy of the intelligent device allows a specific degree of violation of the inner soft constraint, and a case in which no decision can be made does not occur. In addition, even if the inner soft constraint is violated, an objective of avoiding the target object is also achieved under the outer soft constraint.

It may be understood that the avoidance control method in this embodiment of this application may be applied to a scenario in which a surrounding target needs to be sensed and avoided. For example, the avoidance control method in this embodiment of this application may be applied to a robot or another electronic device having an autonomous driving capability. This is not limited in embodiments of this application.

For example, when the avoidance control method in this embodiment of this application is applied to a robot vacuum cleaner in a smart home field, the robot vacuum cleaner may determine an outer soft constraint of avoidance control based on first information of a target object in a surrounding environment, and may determine an inner soft constraint of avoidance control based on second information of the target object. Then, an avoidance policy of the intelligent device is determined based on the outer soft constraint and the inner soft constraint. In this way, when avoiding the target object, the robot vacuum cleaner may make the intelligent device tend to avoid in a direction away from the target object. This reflects human-like behavior of being away from a potential risk.

It may be understood that, to implement the foregoing functions, the vehicle includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application with reference to embodiments, but it should not be considered that the implementation goes beyond the scope of this application.

In this embodiment, the vehicle may be divided into functional modules based on the foregoing method examples. For example, each functional module may be obtained through division based on each function, or two or more functions may be integrated into one processing module. The integrated module may be implemented in a form of hardware. It should be noted that module division in this embodiment is an example and is merely logical function division. In actual implementation, there may be another division manner.

An embodiment of this application further provides a vehicle-mounted device, including a memory, a processor, and a computer program that is stored in the memory and that can be run on the processor. When the processor executes the computer program, the vehicle-mounted device is enabled to implement functions or steps performed by the vehicle in the foregoing method embodiments.

An embodiment of this application further provides an avoidance control apparatus, and the apparatus may be used in the foregoing vehicle-mounted device. The apparatus is configured to perform functions or steps performed by the vehicle in the foregoing method embodiments.

An embodiment of this application further provides a vehicle. The vehicle includes the foregoing vehicle-mounted device or avoidance control apparatus.

An embodiment of this application further provides an intelligent device, and the intelligent device includes the foregoing avoidance control apparatus. The intelligent device may be a robot or another electronic device having an autonomous driving capability.

An embodiment of this application further provides a chip system. The chip system includes at least one processor and at least one interface circuit. The processor and the interface circuit may be interconnected through a line. The interface circuit may read instructions stored in the memory, and send the instructions to the processor. When the instructions are executed by the processor, the vehicle may be enabled to perform functions or steps performed by the vehicle in the foregoing method embodiments. Certainly, the chip system may further include another discrete component. This is not specifically limited in embodiments of this application.

An embodiment of this application further provides a computer-readable storage medium. The computer-readable storage medium includes computer instructions. When the computer instructions are run on the foregoing intelligent device, the intelligent device is enabled to perform functions or steps performed by the vehicle in the foregoing method embodiments.

An embodiment of this application further provides a computer program product. When the computer program product runs on a computer, the computer is enabled to perform functions or steps performed by the vehicle in the method embodiments.

The vehicle-mounted device, the vehicle, the robot, the computer storage medium, the computer program product, or the chip provided in this embodiment is configured to perform the corresponding method provided above. Therefore, for beneficial effect that can be achieved, refer to beneficial effect in the corresponding method provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division in actual implementation. For example, a plurality of units or components may be combined or integrated into another apparatus, or some features may be ignored or not performed. In addition, the displayed or discussed mutual couplings, direct couplings, communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An avoidance control method, applied to an intelligent device, wherein the method comprises:
determining a first constraint of avoidance control based on first information of a target object in a surrounding environment of the intelligent device, wherein the first constraint indicates a first passing area in which the intelligent device avoids the target object; and
determining a second constraint of avoidance control based on second information of the target object, wherein the second constraint indicates a second passing area that is in the first passing area and in which the intelligent device is away from the target object.

2. The method according to claim 1, wherein the method further comprises:
displaying an image comprising a location relationship among the intelligent device, the first passing area, and the second passing area.

3. The method according to claim 2, wherein the method further comprises:
obtaining a live image of a surrounding environment of the intelligent device, and displaying the live image; and
displaying the first passing area and the second passing area in the live image.

4. The method according to claim 2 or 3, wherein the first passing area is displayed in a first color, and the second passing area is displayed in a second color.

5. The method according to any one of claims 1 to 4, wherein the method further comprises:
displaying an image comprising a location relationship among the intelligent device, a boundary of the first constraint, and a boundary of the second constraint.

6. The method according to any one of claims 1 to 5, wherein the method further comprises:
determining a first dangerous area indicated outside the boundary of the first constraint;
determining a second dangerous area indicated outside the boundary of the second constraint; and
displaying an image comprising a location relationship among the intelligent device, the first dangerous area, and the second dangerous area.

7. The method according to any one of claims 1 to 6, wherein
the first constraint comprises constraining a distance between the target object and the intelligent device to be greater than a first preset distance; and
the second constraint comprises constraining the distance between the target object and the intelligent device to be greater than a second preset distance, wherein
the second preset distance is greater than the first preset distance.

8. The method according to any one of claims 1 to 7, wherein the first information comprises appearance information, and the second information comprises the appearance information and speed information.

9. The method according to claim 8, wherein the second information further comprises a lateral decision and/or a longitudinal decision of the intelligent device on the target object.

10. The method according to claim 9, wherein the speed information comprises a speed direction, and the second constraint comprises:
increasing an avoidance distance of the lateral decision when a direction of the lateral decision is the same as the speed direction; or
decreasing an avoidance distance of the lateral decision when a direction of the lateral decision is opposite to the speed direction.

11. The method according to any one of claims 1 to 10, wherein the first constraint and the second constraint are constraint conditions with an attribute of a soft constraint.

12. The method according to any one of claims 1 to 11, wherein the method further comprises:
determining an avoidance policy of the intelligent device based on the first constraint and the second constraint.

13. The method according to claim 12, wherein the determining an avoidance policy of the intelligent device based on the first constraint and the second constraint comprises:
establishing a planning control model based on the first constraint and the second constraint, wherein the planning control model is configured to output a planned avoidance path, wherein
in the planning control model, a penalty coefficient of the first constraint is a first preset threshold, a penalty coefficient of the second constraint is a second preset threshold, and the first preset threshold is greater than the second preset threshold.

14. An intelligent device, wherein the intelligent device comprises a memory and one or more processors; the memory is coupled to the processor; the memory is configured to store computer program code; the computer program code comprises computer instructions; and when the processor executes the computer instructions, the intelligent device performs the method according to any one of claims 1 to 13.

15. A vehicle-mounted device, wherein the vehicle-mounted device comprises a memory and one or more processors; the memory is coupled to the processor; the memory is configured to store computer program code; the computer program code comprises computer instructions; and when the processor executes the computer instructions, the vehicle-mounted device performs the method according to any one of claims 1 to 13.

16. A vehicle, wherein the vehicle comprises a vehicle-mounted device, and the vehicle-mounted device performs the method according to any one of claims 1 to 13.

17. A robot, wherein the robot comprises a memory and one or more processors; the memory is coupled to the processor; the memory is configured to store computer program code; the computer program code comprises computer instructions; and when the processor executes the computer instructions, the robot performs the method according to any one of claims 1 to 13.

18. A chip system, wherein the chip system is used in an intelligent device; the chip system comprises one or more interface circuits and one or more processors; the interface circuit and the processor are interconnected through a line; the interface circuit is configured to: receive a signal from a memory of the intelligent device, and send the signal to the processor, wherein the signal comprises computer instructions stored in the memory; and when the processor executes the computer instructions, the intelligent device performs the method according to any one of claims 1 to 13.

19. A computer-readable storage medium, comprising computer instructions, wherein when the computer instructions are run on an intelligent device, the intelligent device is enabled to perform the method according to any one of claims 1 to 13.

20. A computer program product, wherein when the computer program product runs on a computer, the computer is enabled to perform the method according to any one of claims 1 to 13.
